# EUROPEAN PATENT APPLICATION

(11) **EP 4 130 932 A1**
(43) Date of publication of application: **08.02.2023**
(21) Application number: 21208873.6
(22) Date of filing: 17.11.2021
(51) Int. Cl.: G06F 1/16, H05K 5/02, F16M 11/08, F16M 11/20, F16M 11/04

(54) **DISPLAY DEVICE**

(30) Priority: 03.08.2021 TW 110128454
(71) Applicant: Senor Tech Co., Ltd., New Taipei City 22150 (TW)
(72) Inventor: CHIU, Hsin-Liang, New Taipei City 22150 (TW)
(74) Representative: CAPRI

(57) **Abstract**

A display device is provided. The display device includes a screen body, a first angle adjustment mechanism, a connecting arm, a second angle adjustment mechanism, and a pedestal. The screen body is provided with a first set of positioning holes and a second set of positioning holes. A first angle adjustment mechanism is selectively connected to the screen body through the first set of positioning holes or the second set of positioning holes, so that the screen body is disposed vertically or horizontally. The first angle adjustment mechanism is pivotally connected to the connecting arm, so that the screen body and the connecting arm are rotatable relative to each other. The second angle adjustment mechanism is pivotally connected to the connecting arm and the pedestal, so that the connecting arm and the pedestal are rotatable relative to each other.

## Description

### BACKGROUND

### Technical Field

The present invention relates to a display device, and more specifically, to a display device with a Point of Sale (POS) system.

### Related Art

Currently, a POS system applied to a store, a shopping mall, a counter, or a bank is usually used together with a cash register. The existing POS system includes a touch display device for a user to tap, a pedestal standing on a flat surface, and a connecting element for connecting the display device to the pedestal. A display screen and a host of the existing POS system are relatively complicated in assembly and disassembly. Therefore, when maintenance personnel want to repair or replace the display screen or the host, it needs to take more working hours in disassembly and assembly. In addition, because the existing POS system has its limitation in a portrait mode or a landscape mode during installation of a display screen vertically or horizontally, respectively, and once a portrait mode or a landscape mode is selected, the display screen can hardly be altered, manufacturers find it inconvenient in manufacturing, stocking, and inventory management.

Based on the foregoing reasons, it is necessary to provide a solution that can solve the shortage in the prior art.

### SUMMARY

In view of the above problem in the prior art, an objective of the present invention is to provide a display device with a simple structure to flexibly adjust an assembly mode of a screen.

The present invention provides a display device, including a screen body, a first angle adjustment mechanism, a connecting arm, a second angle adjustment mechanism, and a pedestal, wherein the screen body is provided with a first set of positioning holes and a second set of positioning holes, the first set of positioning holes corresponds to a portrait mode of the screen body and the second set of positioning holes corresponds to a landscape mode of the screen body, and the first angle adjustment mechanism is selectively connected to the screen body through the first set of positioning holes or the second set of positioning holes, so that the screen body is disposed vertically or horizontally; the first angle adjustment mechanism is pivotally connected to the connecting arm, so that the screen body and the connecting arm are rotatable relative to each other in a circumferential direction of the first angle adjustment mechanism; and the second angle adjustment mechanism is pivotally connected to the connecting arm and the pedestal, so that the connecting arm and the pedestal are rotatable relative to each other in a circumferential direction of the second angle adjustment mechanism.

In an embodiment of the present invention, the first angle adjustment mechanism is formed by a pair of pivot elements, wherein each pivot element includes a pivot end and a fixed end.

In an embodiment of the present invention, the second angle adjustment mechanism includes a pivot shaft body and pivot shaft connecting ends formed on both sides of the pivot shaft body.

In an embodiment of the present invention, one end of the connecting arm corresponding to the pivot end is provided with a first pivot portion, and the other end of the connecting arm corresponding to the pivot shaft body is provided with a second pivot portion.

In an embodiment of the present invention, one side of the pedestal corresponding to the pivot shaft connecting ends is provided with a third pivot portion.

In an embodiment of the present invention, the other side of the pedestal is provided with an outer connecting portion.

In an embodiment of the present invention, the display device further includes a base, wherein the pedestal is connected to the base through the outer connecting portion.

### BRIEF DESCRIPTION OF THE DRAWINGS

FIG. 1 is a perspective view of a portrait mode of a display device according to the present invention.
FIG. 2 is a perspective view of a landscape mode of the display device according to the present invention.
FIG. 3 is an exploded view of a portrait mode of the display device according to the present invention.
FIG. 4 is an exploded view of a landscape mode of the display device according to the present invention.
FIG. 5 is a perspective view of a landscape mode of another embodiment of the display device according to the present invention.
FIG. 6 and FIG. 7 are perspective views of a portrait mode of another embodiment of the display device according to the present invention.

### DETAILED DESCRIPTION

To make the foregoing and other objectives, features, and advantages of the present invention easier to understand, description is made in detail below by using preferred embodiments of the present invention with reference to the accompanying drawings.

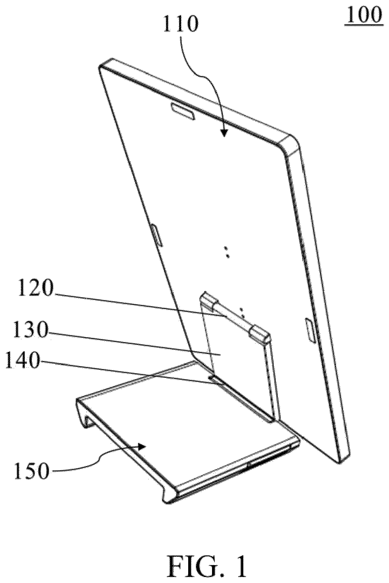

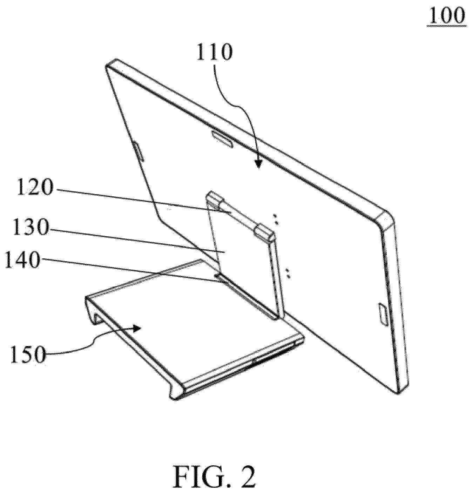

First, refer to FIG. 1 and FIG 2. FIG. 1 is a perspective view of a portrait mode of a display device according to the present invention. FIG. 2 is a perspective view of a landscape mode of the display device according to the present invention. In this embodiment, the display device 100 of the present invention includes a screen body 110, a first angle adjustment mechanism 120, a connecting arm 130, a second angle adjustment mechanism 140, and a pedestal 150. In FIG. 1, the screen body 110 is disposed in a portrait mode, that is, vertically. Under the other condition, the screen body 110 may be disposed in a landscape mode, that is, horizontally (as shown in FIG. 2). In this embodiment, the pedestal 150 is adjusted to a flat mode, and the pedestal 150 is placed on a supporting surface (for example, a desktop). In this case, the pedestal 150 serves as a foundation of supporting the screen body 110 and the connecting arm 130, so that the screen body 110 is maintained stable.

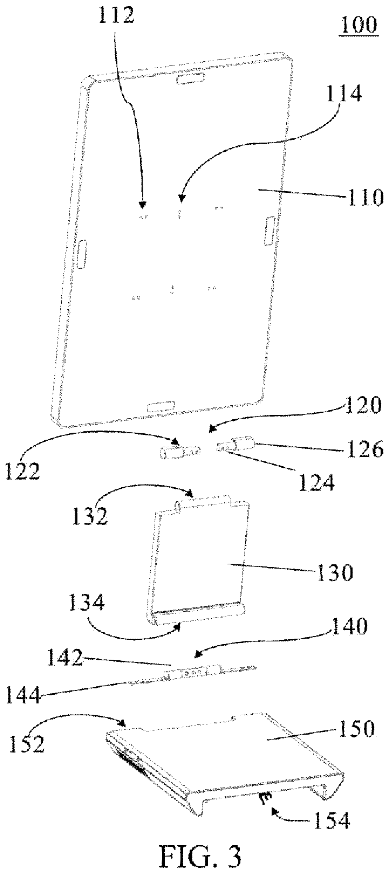

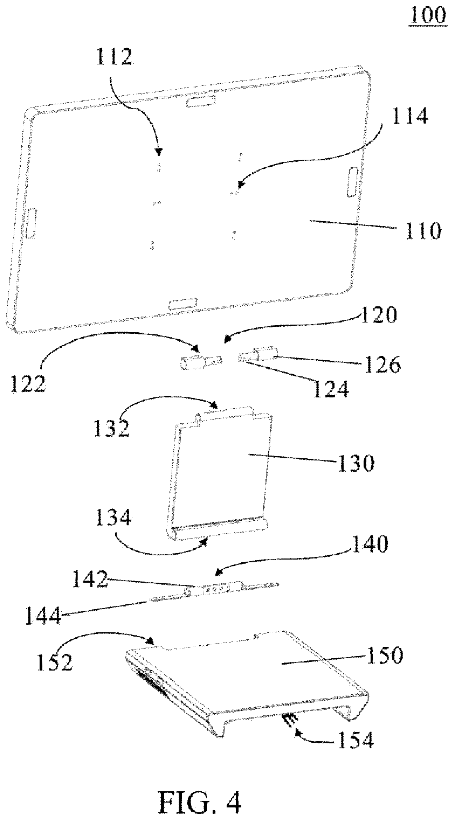

Refer to FIG. 3 and FIG. 4 then. FIG. 3 is an exploded view of a portrait mode of the display device according to the present invention. FIG. 4 is an exploded view of a landscape mode of the display device according to the present invention. The difference between the display devices in FIG. 3 and FIG. 4 is that the screen body 110 is disposed vertically or horizontally. The screen body 110 is provided with a first set of positioning holes 112 and a second set of positioning holes 114. In this embodiment, the first set of positioning holes 112 corresponds to a portrait mode of the screen body 110, and the second set of positioning holes 114 corresponds to a landscape mode of the screen body 110, but this embodiment is not limited thereto. More specifically, when the screen body 110 is assembled by using the first set of positioning holes 112, the screen body 110 is disposed vertically, and when the screen body 110 is assembled by using the second set of positioning holes 114, the screen body 110 is disposed horizontally.

In this embodiment, each set of positioning holes is formed by two pairs of positioning holes, and each pair of positioning holes has two positioning holes. That is, one set of positioning holes is equal to four positioning holes, but this embodiment is not limited thereto. In this embodiment, the first angle adjustment mechanism 120 is formed by a pair of pivot elements 122, where each pivot element 122 includes a pivot end 124 and a fixed end 126. The second angle adjustment mechanism 140 includes a pivot shaft body 142 and pivot shaft connecting ends 144 formed on both sides of the pivot shaft body 142. One end of the connecting arm 130 corresponding to the pivot end(s) 124 is provided with a first pivot portion 132, and the other end of the connecting arm 130 corresponding to the pivot shaft body 142 is provided with a second pivot portion 134. One side of the pedestal 150 corresponding to the pivot shaft connecting ends 144 is provided with a third pivot portion 152.

In this embodiment, the first angle adjustment mechanism 120 is selectively connected to the screen body 110 through the first set of positioning holes 112 or the second set of positioning holes 114, so that the screen body 110 is presented in a portrait mode (that is, vertically) or a landscape mode (that is, horizontally). More specifically, when the fixed end 126 of the pivot element 122 of the first angle adjustment mechanism 120 is connected to the first set of positioning holes 112 of the screen body 110, the screen body 110 is presented vertically (as shown in FIG. 1 and FIG. 3). When the fixed end 126 of the pivot element 122 of the first angle adjustment mechanism 120 is connected to the second set of positioning holes 114 of the screen body 110, the screen body 110 is presented horizontally (as shown in FIG. 2 and FIG. 4). In this embodiment, one side of the fixed end(s) 126 facing the screen body 110 is provided with a screw hole corresponding to the first set of positioning holes 112 or the second set of positioning holes 114. The first set of positioning holes 112 or the second set of positioning holes 114 and the screw hole(s) of the fixed end(s) 126 may be attached together by screws. Due to the connecting structure of the positioning holes and the fixed ends, it is easier to flexibly adjust the screen body 110 to be vertical or horizontal.

In this embodiment, the first angle adjustment mechanism 120 is pivotally connected to the connecting arm 130, so that the screen body 110 and the connecting arm 130 are rotatable relative to each other in a circumferential direction of the first angle adjustment mechanism 120. More specifically, the pivot end 124 of each pivot element 122 of the first angle adjustment mechanism 120 is pivotally connected to the first pivot portion 132 of the connecting arm 130 (in this embodiment, the two pivot elements 122 are respectively inserted into the first pivot portion 132 from both sides). In this way, the pivot element 122 serves as an axial center of the screen body 110 and the connecting arm 130, so that the screen body 110 and the connecting arm 130 are rotatable in a circumferential direction of the axial center. Under this structure, a pitch angle of the screen body 110 can be adjusted. The second angle adjustment mechanism 140 is pivotally connected to the connecting arm 130 and the pedestal 150, so that the connecting arm 130 and the pedestal 150 are rotatable relative to each other in a circumferential direction of the second angle adjustment mechanism 140. In this embodiment, the second angle adjustment mechanism 140 is a pivot shaft. More specifically, a pivot shaft body 142 of the second angle adjustment mechanism 140 is pivotally connected to the second pivot portion 134 of the connecting arm 130, and the pivot shaft connecting ends 144 of the second angle adjustment mechanism 140 are pivotally connected to the third pivot portion 152 of the pedestal 150 (in this embodiment, the pivot shaft body 142 is sleeved in the second pivot portion 134, and the pivot shaft connecting ends 144 are inserted into the third pivot portion 152). In this way, the second angle adjustment mechanism 140 serves as an axial center of the connecting arm 130 and the pedestal 150, so that the connecting arm 130 and the pedestal 150 are rotatable in a circumferential direction of the axial center. Under this structure, the pedestal 150 can be adjusted to various angles such as a horizontal angle or a vertical angle. The foregoing connecting structure is beneficial to disassemble and assemble the screen body 110, the connecting arm 130, and the pedestal 150 more quickly.

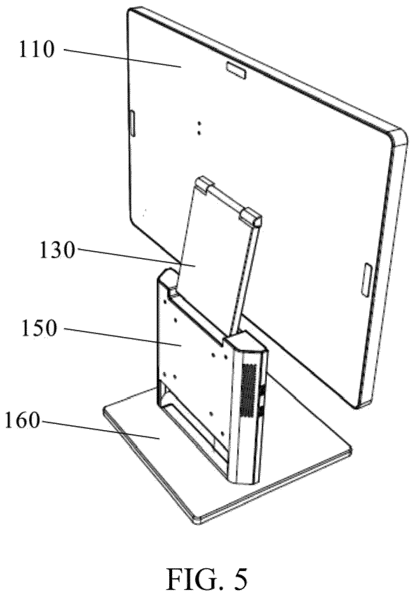

Refer to FIG. 5. FIG. 5 is a perspective view of a landscape mode of another embodiment of the display device according to the present invention. In this embodiment, the display device 100 further includes a base 160. The base 160 is connected to the pedestal 150 through an outer connecting portion 154 (not shown in FIG. 5, but shown in FIG. 3 and FIG. 4). In this embodiment, the pedestal 150 is adjusted to an upright mode, and the base 160 is placed on a supporting surface (for example, a desktop). In this case, the base 160 serves as a foundation of supporting the screen body 110 and the connecting arm 130, so that the screen body 110 is maintained stable. The pedestal 150 serves as an extension of the connecting arm 130, to increase a height of the screen.

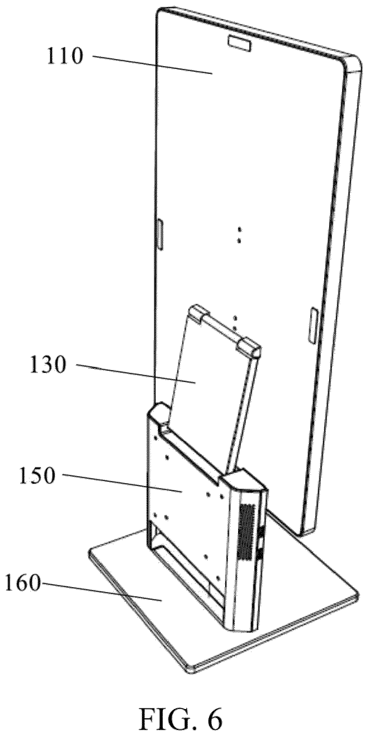

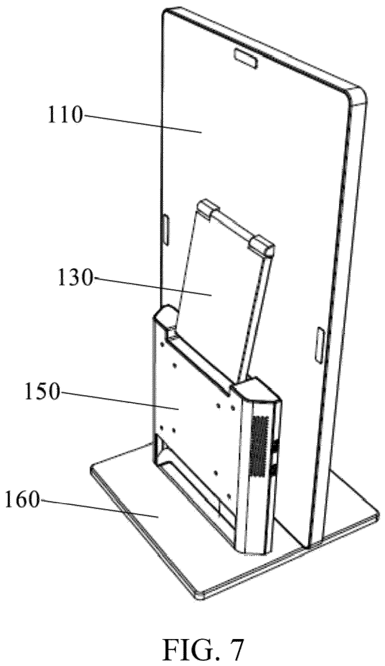

Refer to both FIG. 6 and FIG. 7. FIG. 6 and FIG. 7 are perspective views of a portrait mode of another embodiment of the display device according to the present invention. In an embodiment, the first set of positioning holes 112 may further include upper positioning holes (located at an upper position of the screen body 110 with reference to FIG. 3) and lower positioning holes (located at a lower position of the screen body 110). As shown in FIG. 6, when the connecting arm 130 is connected to the screen body 110 through the lower positioning holes of the first set of positioning holes 112, the height of the screen body 110 is adjusted up. Similarly, as shown in FIG. 7, when the connecting arm 130 is connected to the screen body 110 through the upper positioning holes of the first set of positioning holes 112, the height of the screen body 110 is adjusted down.

In summary, different from the conventional display device, the display device of the present invention provides a function of flexibly adjusting a screen, and achieves an effect of facilitating disassembly and assembly of the display device.

The foregoing descriptions are merely examples, but are not intended to be restrictive. Any equivalent modification or change made to the present invention without departing from the spirit and scope of the present invention should fall within the appended claims of this application.

### REFERENCE NUMERALS

- 100:: Display device
- 110:: Screen body
- 112:: First set of positioning holes
- 114:: Second set of positioning holes
- 120:: First angle adjustment mechanism
- 122:: Pivot element
- 124:: Pivot end
- 126:: Fixed end
- 130:: Connecting arm
- 132:: First pivot portion
- 134:: Second pivot portion
- 140:: Second angle adjustment mechanism
- 142:: Pivot shaft body
- 144:: Pivot shaft connecting end
- 150:: Pedestal
- 152:: Third pivot portion
- 154:: Outer connecting portion
- 160:: Base

## Claims

1. A display device (100), comprising:
a screen body (110), a first angle adjustment mechanism (120), a connecting arm (130), a second angle adjustment mechanism (140), and a pedestal (150),
wherein the screen body (110) is provided with a first set of positioning holes (112) and a second set of positioning holes (114), the first set of positioning holes (112) corresponds to a portrait mode of the screen body (110) and the second set of positioning holes (114) corresponds to a landscape mode of the screen body (110), and the first angle adjustment mechanism (120) is selectively connected to the screen body (110) through the first set of positioning holes (112) or the second set of positioning holes (114), so that the screen body (110) is disposed vertically or horizontally, respectively;
the first angle adjustment mechanism (120) is pivotally connected to the connecting arm (130), so that the screen body (110) and the connecting arm (130) are rotatable relative to each other in a circumferential direction of the first angle adjustment mechanism (120); and
the second angle adjustment mechanism (140) is pivotally connected to the connecting arm (130) and the pedestal (150), so that the connecting arm (130) and the pedestal (150) are rotatable relative to each other in a circumferential direction of the second angle adjustment mechanism (140).

2. The display device (100) according to claim 1, wherein the first angle adjustment mechanism (120) is formed by a pair of pivot elements (122), wherein each pivot element (122) comprises a pivot end (124) and a fixed end (126).

3. The display device (100) according to claim 2, wherein the second angle adjustment mechanism (140) comprises a pivot shaft body (142) and pivot shaft connecting ends (144) formed on both sides of the pivot shaft body (142).

4. The display device (100) according to claim 3, wherein one end of the connecting arm (130) corresponding to the pivot end (124) is provided with a first pivot portion (132), and the other end of the connecting arm (130) corresponding to the pivot shaft body (142) is provided with a second pivot portion (134).

5. The display device (100) according to claim 4, wherein one side of the pedestal (150) corresponding to the pivot shaft connecting ends (144) is provided with a third pivot portion (152).

6. The display device (100) according to claim 5, wherein the other side of the pedestal (150) is provided with an outer connecting portion (154).

7. The display device (100) according to claim 6, wherein the display device (100) further comprises a base (160), wherein the pedestal (150) is connected to the base (160) through the outer connecting portion (154).
